# EUROPEAN PATENT SPECIFICATION

(11) **EP 4 113 245 B1**
(45) Date of publication and mention of the grant of the patent: **30.09.2026**
(21) Application number: 21780853.4
(22) Date of filing: 30.03.2021
(51) Int. Cl.: G06F 1/16, G06F 3/041, B32B 23/04, B32B 23/08, B32B 27/08, B32B 27/32, B32B 27/30, B32B 27/28, B32B 27/36, B32B 27/40

(54) **ELECTRONIC DEVICE INCLUDING FLEXIBLE DISPLAY**
ELEKTRONISCHE VORRICHTUNG MIT FLEXIBLER ANZEIGE
DISPOSITIF ÉLECTRONIQUE COMPRENANT UN ÉCRAN SOUPLE

(30) Priority: 03.04.2020 KR 20200041180
(43) Date of publication of application: 04.01.2023
(73) Proprietor: Samsung Electronics Co., Ltd., Gyeonggi-do 16677 (KR)
(72) Inventor: KIM, Minuk, Suwon-si, Gyeonggi-do 16677 (KR); HEO, Changryong, Suwon-si, Gyeonggi-do 16677 (KR); HEO, Hoondo, Suwon-si, Gyeonggi-do 16677 (KR); KIM, Kwangtai, Suwon-si, Gyeonggi-do 16677 (KR)
(74) Representative: HGF
(86) International application number: PCT/KR2021/003951
(87) International publication number: WO 2021/201575

(56) References cited:
- EP-A1- 3 404 517
- EP-A1- 3 412 444
- WO-A1-2021/025494
- KR-A- 20140 029 662
- KR-A- 20170 093 610
- KR-A- 20170 106 589
- KR-A- 20190 066 795
- US-A1- 2018 321 708
- US-A1- 2019 334 114

## Description

### [Technical Field]

Various embodiments of the disclosure relate to an electronic device including a flexible display.

### [Background Art]

Electronic devices are gradually becoming thinner and are being improved to increase rigidity thereof, to strengthen design aspects thereof, and to differentiate functional elements thereof. Electronic devices are gradually being transformed from a uniform rectangular shape into various shapes. The electronic device may have a transformable structure capable of using a large screen display while being convenient to carry. For example, as part of a transformable structure, the electronic device (e.g., foldable electronic device) may include at least two foldable housings operating in a folded or unfolded manner relative to each other, and it is necessary to provide a support structure for a flexible display disposed to be supported by such housings.

EP 3404 517 A1 relates to a display or an electronic device comprising: a first layer comprising a first member; a second layer which is formed beneath the first layer, the second layer comprising a second member; and a third layer which is formed between the first layer and the second layer, the third layer comprising an adhesive member KR 2017 0106589 A relates to a display device comprising: a flexible display panel providing a display substrate and a thin film encapsulation layer disposed on the display substrate, and having a bending area folding in one direction; a driving part electrically connected to the flexible display panel; and a functional layer disposed on the flexible display panel, and providing a stepped part where a part in which the flexible display panel and the driving part are connected is disposed.

### [Disclosure of Invention]

### [Technical Problem]

A foldable electronic device may include a hinge module (e.g., hinge or hinge device), and a first housing and second housing connected in opposite directions through the hinge module. Such a foldable electronic device may be operated in an in-folding and/or out-folding manner by rotating the first housing in a range of 0 to 360 degrees with respect to the second housing through the hinge module. The foldable electronic device may include a flexible display disposed to cross the first housing and the second housing.

The foldable electronic device may include a flexible display disposed under a bendable window layer. Such a flexible display may receive support and bending characteristics through an internal space of the electronic device or layers (e.g., cushion or conductive sheet (e.g., conductive plate)) stacked under a display panel of the flexible display.

However, a step structure (e.g., an uneven surface of a bracket) disposed inside the foldable electronic device, and a changed structure (e.g., a plurality of opening structures formed in a folded portion of a conductive sheet) of at least one layer disposed under the display panel so as to improve bending characteristics or an uneven structure (e.g., a protruded coil member disposed in a digitizer), of additional electronic components disposed under the display panel may be visible from the outside through the flexible display, or when a touch operation is performed through a window layer, a decrease in surface quality felt by a user may occur.

Various embodiments of the disclosure may provide an electronic device including a flexible display.

Various embodiments may provide an electronic device including a flexible display that can help to secure reliability by constituting an internal step structure that is not visible.

Various embodiments may provide an electronic device including a flexible display that can help to improve a surface quality by preventing an internal step structure from being felt by a user during a touch operation.

Various embodiments may provide an electronic device including a flexible display that can help to improve bending characteristics.

### [Solution to Problem]

The invention is defined in the independent claim and various embodiments are defined in the dependent claims. According to the embodiment covered by the claims, an electronic device includes a first housing; a second housing; a hinge module configured to foldably connect the first housing and the second housing; a flexible display disposed to receive support from the first housing, the hinge module, and the second housing, wherein the flexible display includes a window layer; a display panel disposed under the window layer; a first layer having a first density and disposed under the display panel; and a second layer disposed under the first layer and having a second density lower than the first density; and a step structure disposed under the second layer. The step structure comprises a digitizer including a dielectric substrate and a coil member disposed in a manner of being bent multiple times in the dielectric substrate. The electronic device further comprises a step compensating member disposed to compensate for a height of the coil member in a space between coil parts bent multiple times of the coil member.

According to various embodiments, the flexible display may include a window layer; a display panel disposed under the window layer; a first layer having a first density and disposed under the display panel; and a second layer disposed under the first layer and having a second density lower than the first density.

According to various embodiments, an electronic device may include a hinge module; and a foldable housing connected to the hinge module, wherein the foldable housing may include a first housing including a first surface facing in a first direction and a second surface facing in a second direction opposite to the first surface in an unfolded state; and a second housing including a third surface facing in the first direction and a fourth surface facing in the second direction in an unfolded state; a foldable housing configured to operate to face the first surface and the third surface in a folded state; and a flexible display disposed from the first surface to at least a part of the third surface, wherein the flexible display may include a window layer; a display panel disposed under the window layer; a first layer having a first density and disposed under the display panel; a second layer disposed under the first layer and having a second density lower than the first density; and a digitizer disposed under the second layer, wherein the digitizer may include a dielectric substrate; a coil member disposed in a manner of being bent multiple times in the dielectric substrate; and a step compensation member disposed to compensate a height of the coil member in a space between coil parts of the coil member bent multiple times, wherein the second layer may include a plurality of seating grooves formed in a surface in contact with the digitizer and configured to receive the coil member and/or the step compensation member.

### [Advantageous Effects of Invention]

In a flexible display according to an example embodiment of the disclosure, as a first layer (e.g., high density layer) and a second layer (e.g., low density layer) having different densities are disposed under a display panel, a step structure may not be visible from the outside, an excellent surface quality can be provided during a touch operation, and bending characteristics of the flexible display can be improved.

In a flexible display according to an embodiment of the disclosure, by changing a structure and/or shape of at least one layer formed under the display panel, a step structure may not be visible from the outside without adding a film for preventing reflection. Further, an excellent surface quality can be provided during a touch operation.

Further, various effects directly or indirectly identified through this document can be provided.

### [Brief Description of Drawings]

In connection with the description of the drawings, the same or similar reference numerals may be used for the same or similar components.
FIG. 1A is a front perspective view illustrating an electronic device of a flat state or unfolded state according to various embodiments of the disclosure.
FIG. 1B is a plan view illustrating a front surface of an electronic device in an unfolded state according to various embodiments of the disclosure.
FIG. 1C is a plan view illustrating a rear surface of an electronic device in an unfolded state according to various embodiments of the disclosure.
FIG. 2A is a perspective view illustrating an electronic device in a folded state according to various embodiments of the disclosure.
FIG. 2B is a perspective view illustrating an electronic device in an intermediate state according to various embodiments of the disclosure.
FIG. 3 is an exploded perspective view illustrating an electronic device according to various embodiments of the disclosure.
FIG. 4 is an exploded perspective view illustrating a flexible display according to various embodiments of the disclosure.
FIG. 5 is a partial cross-sectional view illustrating an electronic device taken along line 5-5 of FIG. 1A according to various embodiments of the disclosure.
FIGS. 6A to 6D are diagrams illustrating a stacked structure of a buffer layer according to various embodiments of the disclosure.
FIGS. 7A and 7B are diagrams illustrating a constitution of a digitizer according to various embodiments of the disclosure.
FIGS. 8A and 8B are diagrams illustrating a stacked structure of a buffer layer and a digitizer according to various embodiments of the disclosure.

### [Mode for the Invention]

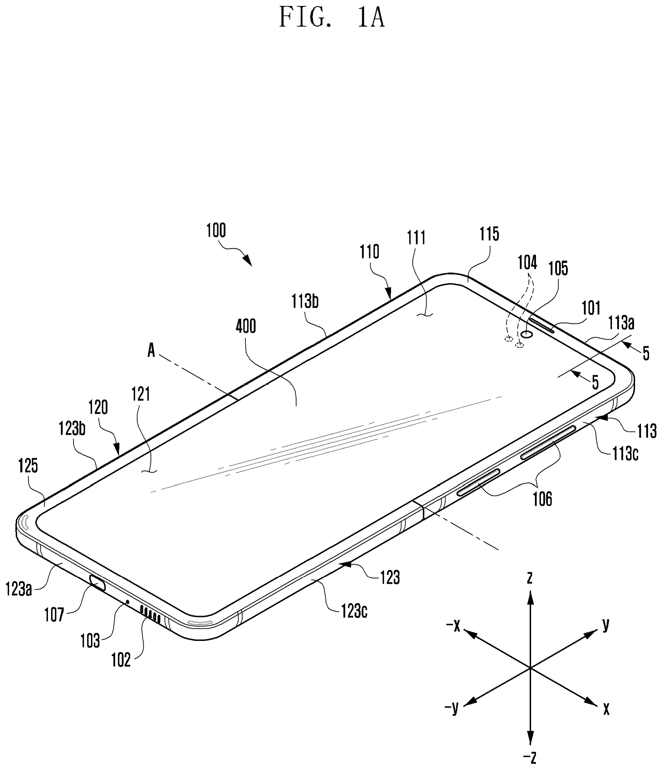

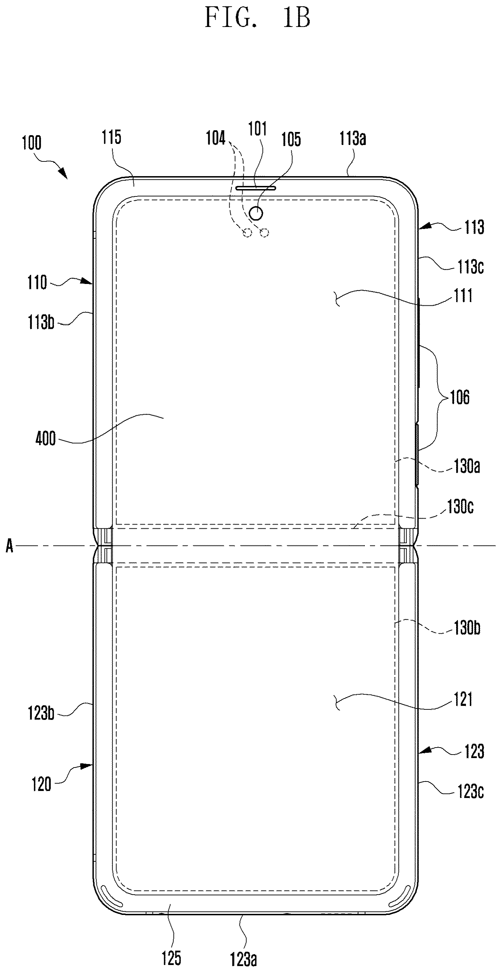

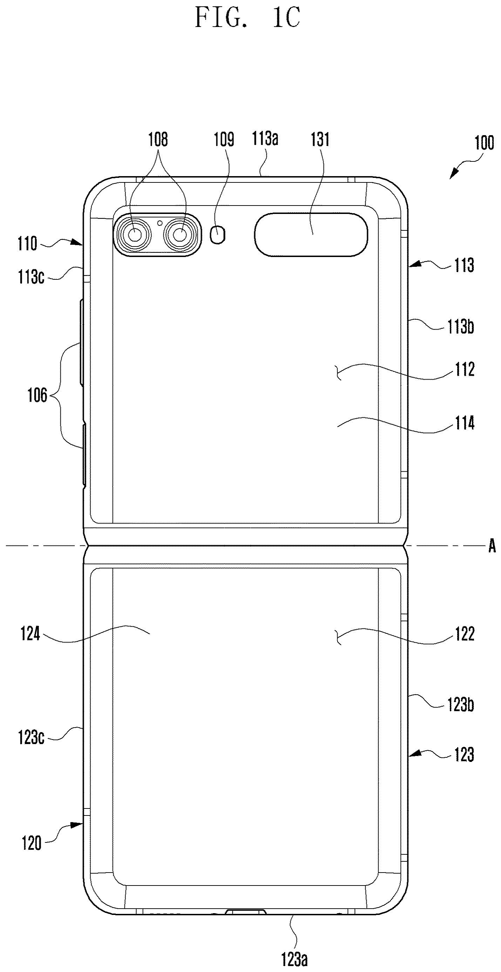

FIG. 1A is a front perspective view of an electronic device in a flat or unfolded state according to certain embodiments of the disclosure. FIG. 1B is a plan view illustrating the front of the electronic device in an unfolded state according to certain embodiments of the disclosure. FIG. 1C is a plan view illustrating the back of the electronic device in an unfolded state according to certain embodiments of the disclosure.

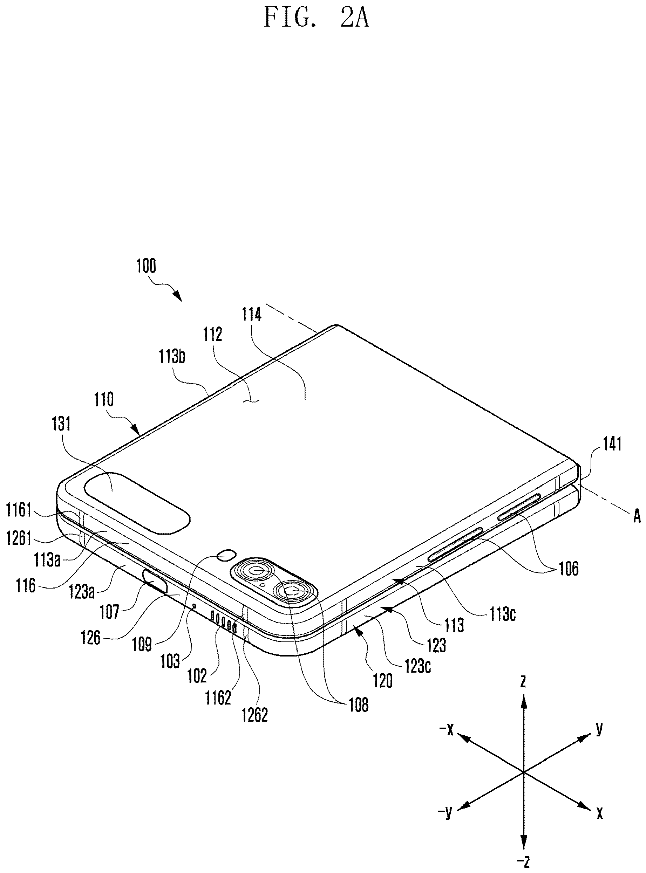

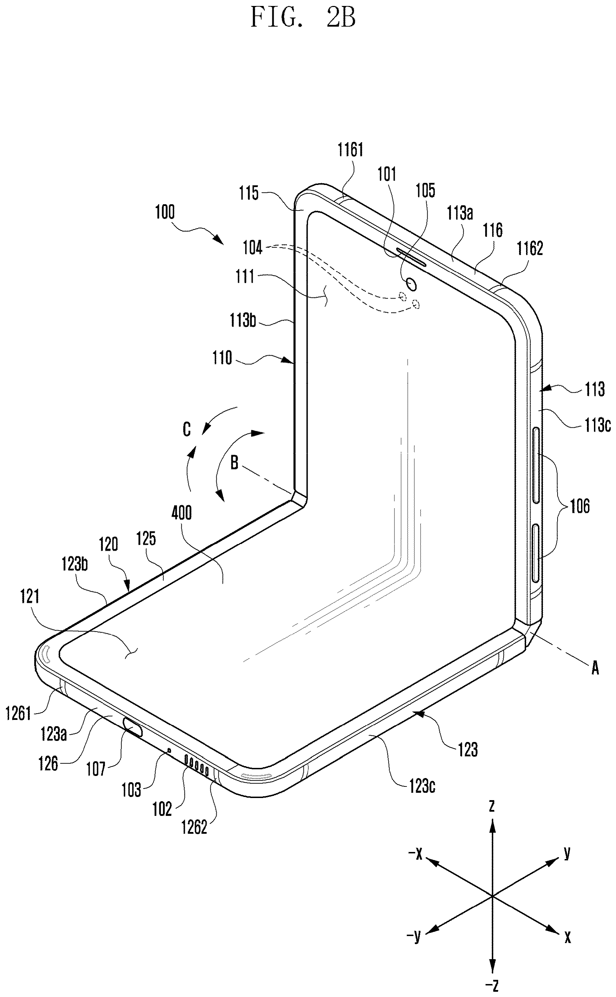

FIG. 2A is a perspective view of the electronic device in a folded state according to certain embodiments of the disclosure. FIG. 2B is a perspective view of the electronic device in an intermediate state according to certain embodiments of the disclosure.

With reference to FIGS. 1A to 2B, the electronic device 100 may include a pair of housings 110 and 120 (e.g., foldable housings) that are rotatably coupled as to allow folding relative to a hinge mechanism (e.g., hinge mechanism 140 in FIG. 1B). In certain embodiments, the hinge mechanism (e.g., hinge mechanism 140 in FIG. 1B) may be disposed in the X-axis direction or in the Y-axis direction. In certain embodiments, two or more hinge mechanisms (e.g., hinge mechanism 140 in FIG. 1B) may be arranged to be folded in a same direction or in different directions. According to an embodiment, the electronic device 100 may include a flexible display 400 (e.g., foldable display) disposed in an area formed by the pair of housings 110 and 120. According to an embodiment, the first housing 110 and the second housing 120 may be disposed on both sides about the folding axis (axis A), and may have a substantially symmetrical shape with respect to the folding axis (axis A). According to an embodiment, the angle or distance between the first housing 110 and the second housing 120 may vary, depending on whether the state of the electronic device 100 is a flat or unfolded state, a folded state, or an intermediate state.

According to certain embodiments, the pair of housings 110 and 120 may include a first housing 110 (e.g., first housing structure) coupled to the hinge mechanism (e.g., hinge mechanism 140 in FIG. 1B), and a second housing 120 (e.g., second housing structure) coupled to the hinge mechanism (e.g., hinge mechanism 140 in FIG. 1B). According to an embodiment, in the unfolded state, the first housing 110 may include a first surface 111 facing a first direction (e.g., front direction) (z-axis direction), and a second surface 112 facing a second direction (e.g., rear direction) (negative z-axis direction) opposite to the first surface 111. According to an embodiment, in the unfolded state, the second housing 120 may include a third surface 121 facing the first direction (z-axis direction), and a fourth surface 122 facing the second direction (negative z-axis direction). According to an embodiment, the electronic device 100 may be operated in such a manner that the first surface 111 of the first housing 110 and the third surface 121 of the second housing 120 face substantially the same first direction (z-axis direction) in the unfolded state, and the first surface 111 and the third surface 121 face one another in the folded state. According to an embodiment, the electronic device 100 may be operated in such a manner that the second surface 112 of the first housing 110 and the fourth surface 122 of the second housing 120 face substantially the same second direction (negative z-axis direction) in the unfolded state, and the second surface 112 and the fourth surface 122 face one another in opposite directions in the folded state. For example, in the folded state, the second surface 112 may face the first direction (z-axis direction), and the fourth surface 122 may face the second direction (negative z-axis direction).

According to certain embodiments, the first housing 110 may include a first side member 113 that at least partially forms an external appearance of the electronic device 100, and a first rear cover 114 coupled to the first side member 113 that forms at least a portion of the second surface 112 of the electronic device 100. According to an embodiment, the first side member 113 may include a first side surface 113a, a second side surface 113b extending from one end of the first side surface 113a, and a third side surface 113c extending from the other end of the first side surface 113a. According to an embodiment, the first side member 113 may be formed in a rectangular shape (e.g., square or rectangle) through the first side surface 113a, second side surface 113b, and third side surface 113c.

According to certain embodiments, the second housing 120 may include a second side member 123 that at least partially forms the external appearance of the electronic device 100, and a second rear cover 124 coupled to the second side member 123, forming at least a portion of the fourth surface 122 of the electronic device 100. According to an embodiment, the second side member 123 may include a fourth side surface 123a, a fifth side surface 123b extending from one end of the fourth side surface 123a, and a sixth side surface 123c extending from the other end of the fourth side surface 123a. According to an embodiment, the second side member 123 may be formed in a rectangular shape through the fourth side surface 123a, fifth side surface 123b, and sixth side surface 123c.

According to certain embodiments, the pair of housings 110 and 120 are not limited to the shape and combinations illustrated herein, and may be implemented with a combination of other shapes or parts. For example, in certain embodiments, the first side member 113 may be integrally formed with the first rear cover 114, and the second side member 123 may be integrally formed with the second rear cover 124.

According to certain embodiments, in the unfolded state of the electronic device 100, the second side surface 113b of the first side member 113 and the fifth side surface 123b of the second side member 123 may be connected without a gap formed therebetween. According to an embodiment, in the unfolded state of the electronic device 100, the third side surface 113c of the first side member 113 and the sixth side surface 123c of the second side member 123 may be connected without a gap formed therebetween. According to an embodiment, in the unfolded state, the electronic device 100 may be configured such that the combined length of the second side surface 113b and the fifth side surface 123b is longer than the combined length of the first side surface 113a and/or the fourth side surface 123a. In addition, the combined length of the third side surface 113c and the sixth side surface 123c may be configured to be longer than the length of the first side surface 113a and/or the fourth side surface 123a.

According to certain embodiments, the first side member 113 and/or the second side member 123 may be formed of a metal, and may further include a polymer injected into the metal. According to an embodiment, the first side member 113 and/or the second side member 123 may include at least one conductive portion 116 and/or 126 electrically segmented through one or more segmenting portions 1161 and 1162 and/or segmenting 1261 and 1262, which may be formed using a polymer. In this case, the at least one conductive portion may be electrically connected to a wireless communication circuit included in the electronic device 100, and may be used as an antenna operating in at least one designated band (e.g., legacy band).

According to certain embodiments, the first rear cover 114 and/or the second rear cover 124 may be formed of, for example, coated or tinted glass, ceramic, polymer, metal (e.g., aluminum, stainless steel or "STS", or magnesium), or a combination thereof.

According to certain embodiments, the flexible display 400 may be disposed to extend from the first surface 111 of the first housing 110 across the hinge mechanism (e.g., hinge mechanism 140 in FIG. 1B) to at least a portion of the third surface 121 of the second housing 120. For example, the flexible display 400 may include a first region 130a substantially corresponding to the first surface 111, a second region 130b corresponding to the second surface 121, and a third region 130c (e.g., the bendable region) connecting the first region 130a and the second region 130b and corresponding to the hinge mechanism (e.g., hinge mechanism 140 in FIG. 1B). According to an embodiment, the electronic device 100 may include a first protection cover 115 (e.g., first protection frame or first decoration member) coupled along the periphery of the first housing 110. According to an embodiment, the electronic device 100 may include a second protection cover 125 (e.g., second protection frame or second decoration member) coupled along the periphery of the second housing 120. According to an embodiment, the first protection cover 115 and/or the second protection cover 125 may be formed of a metal or polymer material. According to an embodiment, the first protection cover 115 and/or the second protection cover 125 may be used as a decorative member. According to an embodiment, the flexible display 400 may be positioned such that the periphery of the first region 130a is interposed between the first housing 110 and the first protection cover 115. According to an embodiment, the flexible display 400 may be positioned such that the periphery of the second region 130b is interposed between the second housing 120 and the second protection cover 125. According to an embodiment, the flexible display 400 may be positioned such that the periphery of the flexible display 400 corresponding to a protection cap 135 is protected through the protection cap disposed in a region corresponding to the hinge mechanism (e.g., hinge mechanism 140 in FIG. 1B). Consequently, the periphery of the flexible display 400 may be substantially protected from the outside. According to an embodiment, the electronic device 100 may include a hinge housing 141 (e.g., hinge cover) that is disposed so as to support the hinge mechanism (e.g., hinge mechanism 140 in FIG. 1B). The hinge housing 141 may further be exposed to the outside when the electronic device 100 is in the folded state, and be invisible as viewed from the outside when retracted into a first space (e.g., internal space of the first housing 110 ) and a second space (e.g., internal space of the second housing 120) when the electronic device 100 is in the unfolded state. In certain embodiments, the flexible display 400 may be disposed to extend from at least a portion of the second surface 112 to at least a portion of the fourth surface 122. In this case, the electronic device 100 may be folded so that the flexible display 400 is exposed to the outside (out-folding scheme).

According to certain embodiments, the electronic device 100 may include a sub-display 131 disposed separately from the flexible display 400. According to an embodiment, the sub-display 131 may be disposed to be at least partially exposed on the second surface 112 of the first housing 110, and may display status information of the electronic device 100 in place of the display function of the flexible display 400 in case of the folded state. According to an embodiment, the sub-display 131 may be disposed to be visible from the outside through at least some region of the first rear cover 114. In certain embodiments, the sub-display 131 may be disposed on the fourth surface 122 of the second housing 120. In this case, the sub-display 131 may be disposed to be visible from the outside through at least some region of the second rear cover 124.

According to certain embodiments, the electronic device 100 may include at least one of an input device 103 (e.g., microphone), sound output devices 101 and 102, a sensor module 104, camera devices 105 and 108, a key input device 106, or a connector port 107. In the illustrated embodiment, the input device 103 (e.g., microphone), sound output devices 101 and 102, sensor module 104, camera devices 105 and 108, key input device 106, and connector port 107 indicate a hole or shape formed in the first housing 110 or the second housing 120, but may be defined to include a substantial electronic component (e.g., input device, sound output device, sensor module, or camera device) that is disposed inside the electronic device 100 and operated through a hole or a shape.

According to certain embodiments, the input device 103 may include at least one microphone disposed on the second housing 120. In certain embodiments, the input device 103 may include a plurality of microphones disposed to detect the direction of a sound. In certain embodiments, a plurality of microphones may be disposed at appropriate positions in the first housing 110 and/or the second housing 120. According to an embodiment, the sound output devices 101 and 102 may include speakers. According to an embodiment, the input device 103 may include a receiver for calls disposed in the first housing 110, and a speaker disposed in the second housing 120. In certain embodiments, the input device 103, the sound output devices 101 and 102, and the connector port 107 may be disposed in a space arranged in the first housing 110 and/or the second housing 120 of the electronic device 100, and may be exposed to the external environment through at least one hole formed in the first housing 110 and/or the second housing 120. According to an embodiment, at least one connector port 107 may be used to transmit and receive power and/or data to and from an external electronic device. In certain embodiments, at least one connector port (e.g., headphonejack hole) may accommodate a connector (e.g., headphonejack) for transmitting and receiving an audio signal to and from an external electronic device. In certain embodiments, the hole formed in the first housing 110 and/or the second housing 120 may be commonly used for the input device 103 and the sound output devices 101 and 102. In certain embodiments, the sound output devices 101 and 102 may include a speaker (e.g., piezo speaker) that operates without using a hole formed in the first housing 110 and/or the second housing 120.

According to certain embodiments, the sensor module 104 may generate an electrical signal or data value corresponding to an internal operating state of the electronic device 100 or an external environmental state. The sensor module 104 may detect an external environment, for example, through the first surface 111 of the first housing 110. In certain embodiments, the electronic device 100 may further include at least one sensor module disposed to detect an external environment through the second surface 112 of the first housing 110. According to an embodiment, the sensor module 104 (e.g., illuminance sensor) may be disposed under the flexible display 400 to detect an external environment through the flexible display 400. According to an embodiment, the sensor module 104 may include at least one of a gesture sensor, a gyro sensor, a barometric pressure sensor, a magnetic sensor, an acceleration sensor, a grip sensor, a color sensor, an infrared (IR) sensor, a biometric sensor, a temperature sensor, a humidity sensor, a proximity sensor, a biometric sensor, an ultrasonic sensor, or an illuminance sensor 104.

According to certain embodiments, the camera devices 105 and 108 may include a first camera device 105 (e.g., front camera device) disposed on the first surface 111 of the first housing 110, and a second camera device 108 disposed on the second surface 112 of the first housing 110. The electronic device 100 may further include a flash 109 disposed close to the second camera device 108. According to an embodiment, the camera device 105 or 108 may include one or more lenses, an image sensor, and/or an image signal processor. The flash 109 may include, for example, a light emitting diode or a xenon lamp. According to an embodiment, the camera devices 105 and 108 may be arranged so that two or more lenses (e.g., wide-angle lens, super-wide-angle lens, or telephoto lens) and image sensors are positioned on one surface (e.g., first surface 111, second surface 112, third surface 121, or fourth surface 122) of the electronic device 100. In certain embodiments, the camera devices 105 and 108 may include time-of-flight (TOF) lenses and/or an image sensor.

According to certain embodiments, the key input device 106 (e.g., key button) may be disposed on the third side surface 113c of the first side member 113 of the first housing 110. In certain embodiments, the key input device 106 may be disposed on at least one of the other side surfaces 113a and 113b of the first housing 110 and/or the side surfaces 123a, 123b and 123c of the second housing 120. In certain embodiments, the electronic device 100 may not include some or all of the key input devices 106, and those not included key input devices 106 may be implemented in other forms, such as soft keys, on the flexible display 400. In certain embodiments, the key input device 106 may be implemented by using a pressure sensor included in the flexible display 400.

According to certain embodiments, some of the camera devices 105 and 108 (e.g., first camera device 105) or the sensor module 104 may be disposed to be exposed through the flexible display 400. For example, the first camera device 105 or the sensor module 104 may be arranged in the internal space of the electronic device 100 so as to be in contact with the external environment through an opening (e.g., through hole) formed at least partially in the flexible display 400. In another embodiment, some sensor modules 104 may be arranged in the internal space of the electronic device 100 so as to perform their functions without being visually exposed through the flexible display 400. For example, in this case, the opening of a region of the flexible display 400 facing the sensor module may not be needed.

With reference to FIG. 2B, the electronic device 100 may be operated to remain in an intermediate state through the hinge mechanism (e.g., hinge device 140 in FIG. 1B). In this case, the electronic device 100 may control the flexible display 400 to display different pieces of content on the display area corresponding to the first surface 111 and the display area corresponding to the third surface 121. According to an embodiment, the electronic device 100 may be operated substantially in an unfolded state (e.g., unfolded state of FIG. 1A) and/or substantially in a folded state (e.g., folded state of FIG. 2A) with respect to a specific inflection angle (e.g., angle between the first housing 110 and the second housing 120 in the intermediate state) through the hinge mechanism (e.g., hinge mechanism 140 in FIG. 1B). For example, when a pressing force is applied in the unfolding direction (B direction) in a state where the electronic device 100 is unfolded at a specific inflection angle, through the hinge mechanism (e.g., hinge mechanism 140 in FIG. 1B), the electronic device 100 may be transitioned to an unfolded state (e.g., unfolded state of FIG. 1A). For example, when a pressing force is applied in the folding direction (C direction) in a state where the electronic device 100 is unfolded at a specific inflection angle, through the hinge mechanism (e.g., hinge mechanism 140 in FIG. 1B), the electronic device 100 may be transitioned to a closed state (e.g., folded state of FIG. 2A). In an embodiment, the electronic device 100 may be operated to remain in an unfolded state at various angles (not shown) through the hinge mechanism (e.g., hinge mechanism 140 in FIG. 1B).

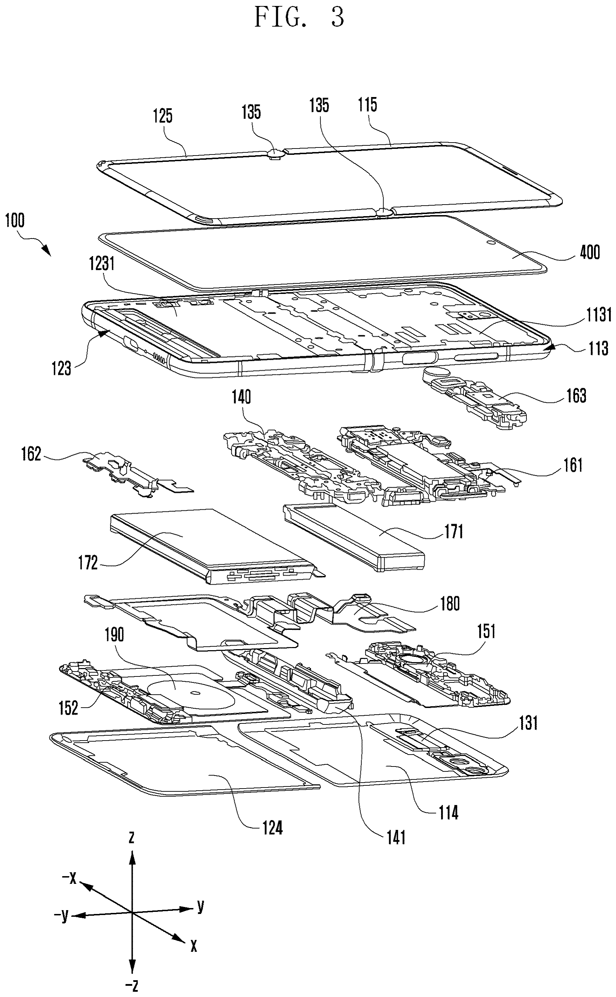

FIG. 3 is an exploded perspective view of the electronic device according to certain embodiments of the disclosure.

With reference to FIG. 3, the electronic device 100 may include a first side member 113 (e.g., first side frame), a second side member 123 (e.g., second side frame), and a hinge mechanism 140 (e.g., hinge module) rotatably connecting the first side member 113 and the second side member 123. According to an embodiment, the electronic device 100 may include a first support member 1131 (e.g., first support member) at least partially extending from the first side member 113, and a second support member 1231 at least partially extending from the second side member 123. According to an embodiment, the first support member 1131 may be integrally formed with the first side member 113 or may be structurally coupled to the first side member 113. Similarly, the second support member 1231 may be integrally formed with the second side member 123 or may be structurally coupled to the second side member 123. According to an embodiment, the electronic device 100 may include a flexible display 400 disposed to be supported by the first support member 1131 and the second support member 1231. According to an embodiment, the electronic device 100 may include a first rear cover 114 that is coupled to the first side member 113 and provides a first space between itself and the first support member 1131, and a second rear cover 124 that is coupled to the second side member 123 and provides a second space between itself and the second support member 1231. In certain embodiments, the first side member 113 and the first rear cover 114 may be integrally formed. In certain embodiments, the second side member 123 and the second rear cover 124 may be integrally formed. According to an embodiment, the electronic device 100 may include a first housing 110 (e.g., first housing 110 in FIG. 1A) (e.g., first housing structure) provided through the first side member 113, the first support member 1131, and the first rear cover 114. According to an embodiment, the electronic device 100 may include a second housing (e.g., second housing 120 in FIG. 1A) (e.g., second housing structure) provided through the second side member 123, the second support member 1231, and the second rear cover 124. According to an embodiment, the electronic device 100 may include a sub-display 131 that is disposed to be visible from the outside through at least some region of the first rear cover 114.

According to certain embodiments, the electronic device 100 may include a first substrate assembly 161 (e.g., main printed circuit board), a camera assembly 163, a first battery 171, or a first bracket 151, arranged in the first space between the first side member 113 and the first rear cover 114. According to an embodiment, the camera assembly 163 may include a plurality of camera devices (e.g., camera devices 105 and 108 in FIGS. 1A and 2A), and may be electrically connected to the first substrate assembly 161. According to an embodiment, the first bracket 151 may provide a support structure for supporting the first substrate assembly 161 and/or the camera assembly 163, and improved rigidity. According to an embodiment, the electronic device 100 may include a second board assembly 162 (e.g., sub printed circuit board), an antenna 190 (e.g., coil member), a second battery 172, or a second bracket 152, arranged in the second space between the second side member 123 and the second rear cover 124. According to an embodiment, the electronic device 100 may include a wiring member 180 (e.g., FPCB) extending from the first substrate assembly 161 across the hinge mechanism 140 to a plurality of electronic components arranged between the second side member 123 and the second rear cover 124, to provide electrical connections therebetween. According to an embodiment, the antenna 190 may include a near field communication (NFC) antenna, a wireless charging antenna, and/or a magnetic secure transmission (MST) antenna. The antenna 190 may, for example, perform short-range communication with an external device or wirelessly transmit and receive power utilized for charging.

According to certain embodiments, the electronic device 100 may include a hinge housing 141 (e.g., hinge cover) that supports the hinge mechanism 140 and is disposed so as to be exposed to the outside when the electronic device 100 is in the folded state (e.g., folded state of FIG. 2A) and be invisible from the outside by being retracted into the first space and/or the second space when the electronic device 100 is in the unfolded state (e.g., unfolded state of FIG. 1A).

According to certain embodiments, the electronic device 100 may include a first protection cover 115 coupled along the periphery of the first side member 113. According to an embodiment, the electronic device 100 may include a second protection cover 125 coupled along the periphery of the second side member 123. According to an embodiment, in the flexible display 400, the periphery of a first flat portion (e.g., first flat portion 130a in FIG. 1B) may be protected by the first protection cover 115. According to an embodiment, in the flexible display 400, the periphery of a second flat portion (e.g., second flat portion 130b in FIG. 1B) may be protected by the second protection cover 125. According to an embodiment, the electronic device 100 may include a protection cap 135 that protects the periphery of the third region (e.g., third region 130c in FIG. 1B) of the flexible display 400 corresponding to the hinge mechanism 140.

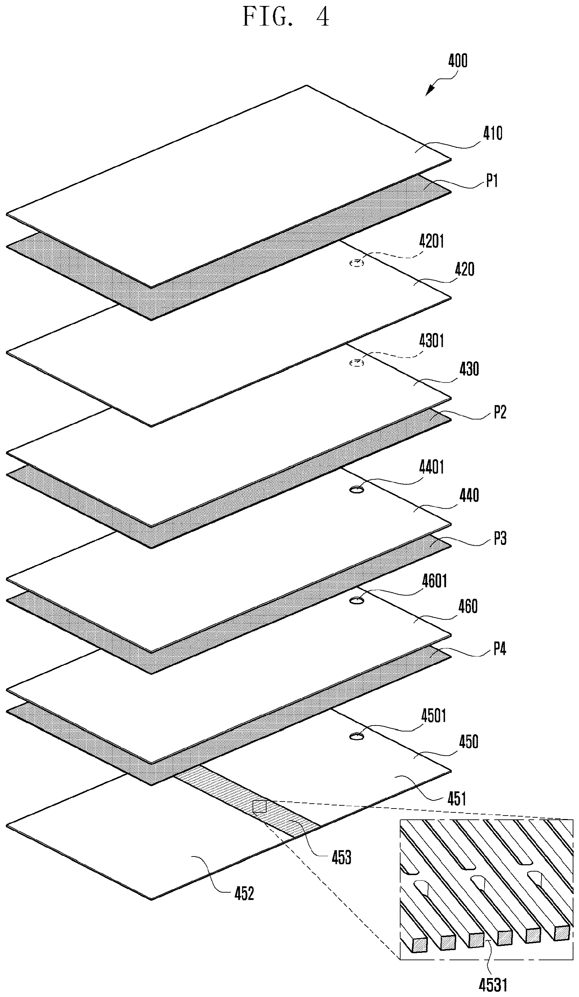

FIG. 4 is an exploded perspective view illustrating a flexible display 400 according to various embodiments of the disclosure.

The display (e.g., the flexible display 400) according to example embodiments of the disclosure may include an unbreakable (UB) type OLED display (e.g., curved display). However, the disclosure is not limited thereto, and the flexible display 400 may include an on cell touch active matrix organic light-emitting diode (OCTA) flat type display.

With reference to FIG. 4, the flexible display 400 may include a window layer 410 and a polarizer (POL) 420 (e.g., polarizing film), a display panel 430, a buffer layer 440, a digitizer 460, and a metal sheet layer 450 sequentially disposed on a rear surface of the window layer 410. According to an embodiment, the window layer 410 may include a glass layer. According to an embodiment, the window layer 410 may include ultra thin glass (UTG). In some embodiments, the window layer 410 may include a polymer. In this case, the window layer 410 may include polyethylene terephthalate (PET) or polyimide (PI). In some embodiments, a plurality of window layers 410 may be disposed. In some embodiments, the window layer 410 may be disposed by a pressure sensitive adhesive having a weaker adhesive force or a thinner thickness than that of other layers so as to be well separated from the other layers. In some embodiments, the window layer 410 may further include various coating layers formed on at least a portion of at least one of an upper surface, a lower surface, or a side surface.

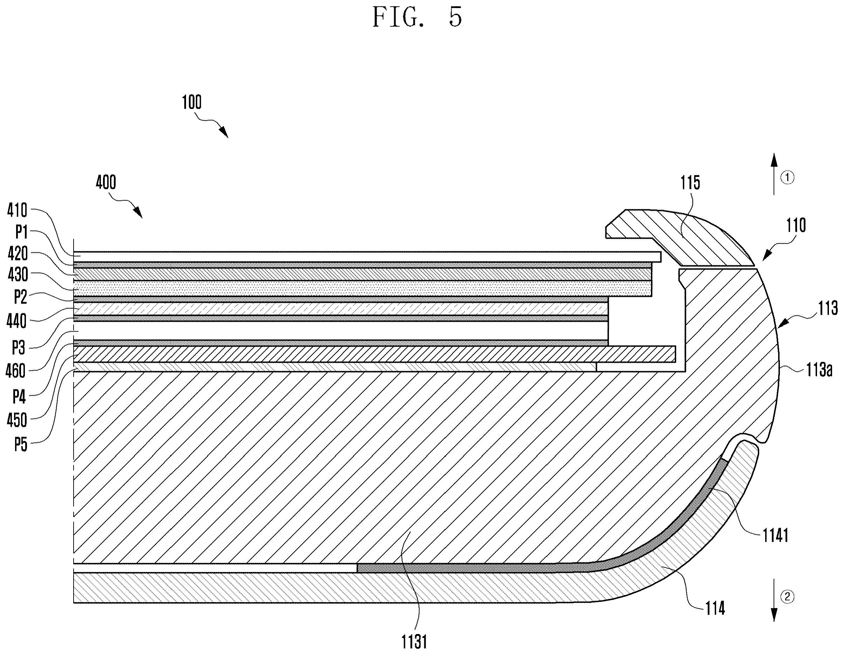

According to various embodiments, the window layer 410, the polarizer 420, the display panel 430, the buffer layer 440, the digitizer 460, and the metal sheet layer 450 may be disposed to cross at least a portion of a first surface (e.g., the first surface 111 of FIG. 1A) of a first housing (e.g., the first housing 110 of FIG. 1A) or a third surface (e.g., the third surface 121 FIG. 1A) of the second housing (e.g., the second housing 120 of FIG. 1A). According to an embodiment, the window layer 410, the polarizer 420, the display panel 430, the buffer layer 440, the digitizer 460, and the metal sheet layer 450 may be attached to each other through pressure sensitive adhesives P1, P2, P3, and P4 (or adhesive). For example, the pressure sensitive adhesives P1, P2, P3, and P4 may include at least one of an optical clear adhesive (OCA), a pressure sensitive adhesive (PSA), a heat-reactive adhesive, a general adhesive, or a double-sided tape. According to an embodiment, the flexible display 400 may include another adhesive member (e.g., an adhesive member P5 of FIG. 5) (e.g., double-sided tape or waterproof member) disposed at least partially at one surface of the metal sheet layer 450. According to an embodiment, the flexible display 400 may be attached to support plates (e.g., the first support plate 1131 and the second support plate 1231 of FIG. 3) of the electronic device (e.g., the electronic device 100 of FIG. 3) through another adhesive member (e.g., the adhesive member P5 of FIG. 5).

According to various embodiments, the display panel 430 may include a plurality of pixels. According to an embodiment, the polarizer 420 may selectively pass light generated in a light source of the display panel 430 and vibrating in a predetermined direction. According to an embodiment, the display panel 430 and the polarizer 420 may be integrally formed. According to an embodiment, the flexible display 400 may include a touch panel (not illustrated). Although not illustrated, the display panel 430 may include a control circuit. According to an embodiment, the control circuit may include a display driver IC (DDI) and/or a touch display driver IC (TDDI) disposed in a chip on panel (COP) or chip on film (COF) manner.

According to various embodiments, the metal sheet layer 450 may help to reinforce rigidity of the electronic device (e.g., the electronic device 100 of FIG. 1A) and be used for shielding ambient noise, and dissipating a heat discharged from peripheral heat dissipation components. According to an embodiment, the metal sheet layer 450 may provide bending characteristics to the flexible display 400. For example, the metal sheet layer 450 may include a first flat portion 451 corresponding to a first surface (e.g., the first surface 111 of FIG. 1A) of the first housing (e.g., the first housing 110 of FIG. 1A), a second flat portion 452 corresponding to a third surface (e.g., the third surface 121 of FIG. 1A) of the second housing (e.g., the second housing 120 of FIG. 1A), and a bendable portion 453 corresponding to the hinge module (e.g., the hinge module 140 of FIG. 3) and for connecting the first flat portion 451 and the second flat portion 452. According to an embodiment, the bendable portion 453 may include a plurality of openings 4531 formed at predetermined intervals, thereby contributing to determining the bending characteristic of the flexible display 400. In some embodiments, the bendable portion 453 may include a plurality of recesses formed at predetermined intervals. For example, the bending characteristic of the flexible display 400 may be determined and/or changed according to the number, a disposition density, and/or a shape of the plurality of openings 4531. According to an embodiment, the metal sheet layer 450 may include at least one of steel use stainless (SUS) (e.g., stainless steel (STS)), Cu, Al, or metal CLAD (e.g., a stacking member in which SUS and Al are alternately disposed). In some embodiments, the metal sheet layer 450 may include other alloy materials. In some embodiments, in the metal sheet layer 450, a portion facing a first housing (e.g., the first housing 110 of FIG. 1A), except for a portion facing the hinge module (e.g., the hinge module 140 of FIG. 3) and a portion facing the second housing (e.g., the second housing 120 of FIG. 1A) may be separately formed. In some embodiments, the flexible display 400 may further include metal reinforcing plates (not illustrated) disposed under the metal sheet layer 450 so as to reinforce rigidity. According to an embodiment, the reinforcing plates may be respectively disposed in a manner facing the first housing (e.g., the first housing 110 of FIG. 1A) and the second housing (e.g., the second housing 120 of FIG. 1A).

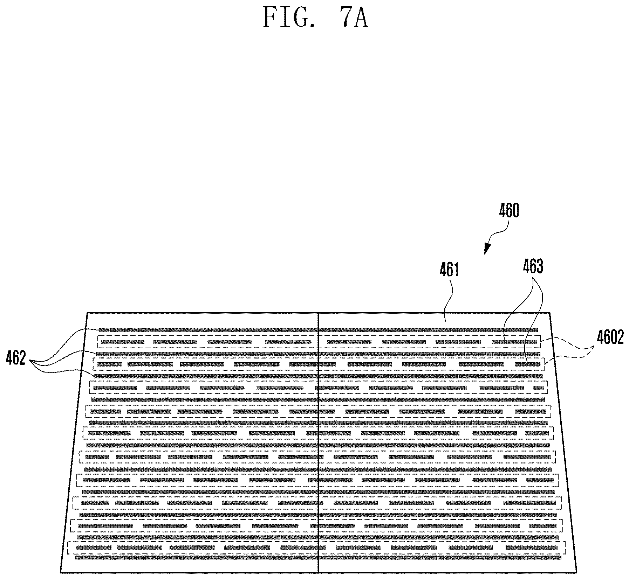

According to various embodiments, the digitizer 460 may include a detection member disposed under the buffer layer 440 and for receiving an input of an electronic pen (e.g., stylus). For example, the digitizer is a detection member and may include a coil member (e.g., a coil member 462 of FIG. 7A) disposed on a dielectric substrate (e.g., a dielectric substrate 461 of FIG. 7A) so as to detect a resonance frequency of an electromagnetic induction method applied from the electronic pen. In some embodiments, the digitizer 460 may be omitted. In some embodiments, the digitizer 460 may be disposed under the metal sheet layer 450.

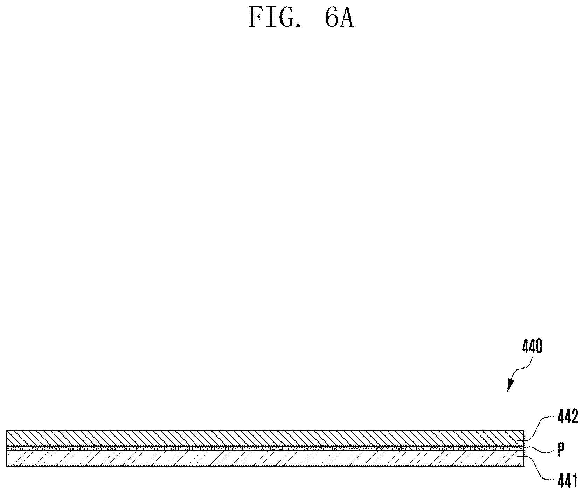

According to various embodiments, the flexible display 400 may include a buffer layer 440 disposed under the display panel 430. According to an embodiment, the buffer layer 440 may include at least two layers (e.g., a first layer 442 of FIG. 6A and a second layer 441 of FIG. 6A) having different densities. According to an embodiment, the first layer (e.g., the first layer 442 of FIG. 6A) may be disposed to relieve a repulsive force and to secure a surface quality when the display panel 430 is folded. According to an embodiment, the second layer (e.g., the second layer 441 of FIG. 6A) may be disposed to compensate for a step structure formed by a coil member (e.g., the coil member 462 of FIG. 7A) of the digitizer 460 disposed thereunder, a step structure formed by the openings 4531 formed in the bendable portion 453 of the metal sheet layer 450, and/or a step structure (or concave-convex structure) formed by an uneven surface of the support plate (e.g., a first support plate 1131 of FIG. 5). According to an embodiment, the buffer layer 440 may be applied with a dark color (e.g., black coating layer) to prevent an internal structure from being visible from the outside, and help to display the background when the display is turned off. According to an embodiment, the buffer layer 440 may absorb an impact from the outside of the electronic device (e.g., the electronic device 100 of FIG. 1A) to prevent the flexible display 400 from being damaged. For example, the buffer layer 440 may include a cushion made of a polymer.

According to various embodiments, the flexible display 400 may include at least one functional member (not illustrated) disposed between the buffer layer 440 and the metal sheet layer 450 and/or between the digitizer 460 and the metal sheet layer 450. According to an embodiment, the functional member may include a graphite sheet for heat dissipation, an added display, a force touch FPCB, a fingerprint sensor FPCB, an antenna radiator for communication, a conductive/non-conductive tape, or an open cell sponge. According to an embodiment, in the case that the functional member cannot be bent, the functional member may be individually disposed in the first housing (e.g., the first housing 110 of FIG. 1A) and the second housing (e.g., the second housing 120 of FIG. 1A). According to an embodiment, in the case that the functional member is bendable, the functional member may be disposed from the first housing (e.g., the first housing 110 of FIG. 1A) to at least a portion of the second housing (e.g., the second housing 120 of FIG. 1A) through the hinge module (e.g., the hinge module 140 of FIG. 3).

According to various embodiments, an electronic device (e.g., the electronic device 100 of FIG. 1A) may include a camera device (e.g., the camera device 105 of FIG. 1A) disposed under the flexible display 400 and for detecting an external environment through the flexible display 400. In some embodiments, the electronic device (e.g., the electronic device 100 of FIG. 1A) may include at least one sensor module (e.g., the sensor module 104 of FIG. 1A) (e.g., illuminance sensor, proximity sensor, or TOF sensor) disposed under the flexible display 400. According to an embodiment, the polarizer 420, the display panel 430, the buffer layer 440, the digitizer 460, and the metal sheet layer 450 may include through-holes 4201, 4301, 4401, 4601, and 4501 formed at corresponding positions so as to detect an external environment through a camera device (e.g., the camera device 105 of FIG. 1A) disposed thereunder. In some embodiments, the display panel 430 and/or the polarizer 420 may not require the through-holes 4201 and 4301 by adjusting transmittance of the corresponding area. According to another embodiment, a size of the through-holes 4201, 4301, 4401, 4601, and 4501 may be formed based on a size of the camera device (e.g., the camera device 105 of FIG. 1A), and/or an angle of view of the camera device (e.g., the camera device 105 of FIG. 1A), and sizes of the respective through-holes 4201, 4301, 4401, 4601, and 4501 may be different from each other.

FIG. 5 is a partial cross-sectional view illustrating the electronic device 100 taken along line 5-5 of FIG. 1A according to various embodiments of the disclosure. In describing the electronic device 100 and the flexible display 400 of FIG. 5, because at least one of the components of the electronic device 100 and the flexible display 400 of FIG. 5 is the same as or similar to at least one of the components of the electronic device 100 of FIGS. 1A to 3 and the flexible display 400 of FIG. 4, overlapping descriptions will be omitted hereinafter. With reference to FIG. 5, the electronic device 100 may include a first housing 110 and a second housing (e.g., the second housing 120 of FIG. 1A) connected through a hinge module (e.g., the hinge module 140 of FIG. 3) and rotatably disposed with respect to each other. According to an embodiment, the electronic device 100 may include a flexible display 400 disposed to face in a first direction (direction ①) through the first housing 110. According to an embodiment, the flexible display 400 may be disposed to receive support from the first support plate 1131 formed in a first side frame 113 of the first housing 110. According to an embodiment, the electronic device 100 may include a first back cover 114 disposed in the first support plate 1131 and facing in a second direction (direction ②) opposite to the first direction. According to an embodiment, the electronic device 100 may implement a waterproof function through a waterproof member 1141 (e.g., waterproof tape) disposed between the first back cover 114 and the first support plate 1131.

According to various embodiments, the electronic device 100 may include a first protective cover 115 disposed along an edge of the first side frame 113. In some embodiments, the first protective cover 115 may be integrally formed with the first side frame 113. According to an embodiment, the flexible display 400 may be protected by having an edge interposed between the first protective cover 115 and the first side frame 113. For example, in the flexible display 400, a window layer 410 is interposed between the first protective cover 115 and the first side frame 113 to protect an edge thereof. In some embodiments, in order to prevent side damage of the window layer 410 during a folding operation of the electronic device 100, an end portion of the window layer 410 may not protrude further than other layers (e.g., the polarizer 420, the display panel 430, the buffer layer 440, and/or the digitizer 460) or may be formed to have substantially the same size as or a smaller size than that of at least an end portion of the display panel 430.

According to various embodiments, the flexible display 400 may include a polarizer 420, a display panel 430, a buffer layer 440, a digitizer 460, and a metal sheet layer 450 sequentially disposed under the window layer 410 through the pressure sensitive adhesives P1, P2, P3, and P4 under the window layer 410. According to an embodiment, the metal sheet layer 450 may be at least partially attached to the first support plate 1131 through the adhesive member P5 (e.g., double-sided tape or waterproof member). According to an embodiment, the buffer layer 440 may prevent the step structure from being visible through the display panel 430, provide an excellent surface quality during a touch manipulation, and help to improve bending characteristics of the flexible display 400 during a folding operation.

According to various embodiments, the disclosure is not limited to the illustrated embodiment, and a structure similar to or the same structure as that of the polarizer 420, the display panel 430, the buffer layer 440, the digitizer 460, and/or the metal sheet layer 450 of the first housing 110 may be formed in the second housing (e.g., the second housing 120 of FIG. 1A).

Hereinafter, a constitution of the buffer layer 440 will be described in detail.

FIGS. 6A to 6D are diagrams illustrating a stacked structure of a buffer layer 440 according to various embodiments of the disclosure.

With reference to FIG. 6A, the buffer layer 440 may include a first layer disposed under the display panel (e.g., the display panel 430 of FIG. 5) and made of a first material and a second layer disposed under the first layer 442 and made of a second material. According to an embodiment, the first layer 442 may include a high density layer 442. The second layer 441 according to an embodiment may include a low density layer having a lower density than that of the first layer 442. According to an embodiment, the first layer 442 may be disposed to relieve a repulsive force that may be generated when the display panel (e.g., the display panel 430 of FIG. 5) is folded and to secure a surface quality (e.g., strength and/or hardness). According to an embodiment, the second layer 441 may be disposed to compensate for a step structure formed by a coil member (e.g., the coil member 462 of FIG. 7A) of a digitizer (e.g., the digitizer 460 of FIG. 5) disposed thereunder, a step structure formed by openings (e.g., the openings 4531 of FIG. 4) formed in a bendable portion (e.g., the bendable portion 453 of FIG. 4) of the metal sheet layer (e.g., the metal sheet layer 450 of FIG. 4), and/or a step structure (or concave-convex structure) formed by an uneven surface of the support plate (e.g., the first support plate 1131 of FIG. 5). Further, the second layer 441 may provide a shock mitigation function to provide shock absorption and/or dispersion of the step structure. According to an embodiment, the second material of the second layer 441 is a cushion film and may include a polymer. According to an embodiment, the cushion film may have double-sided adhesive properties as in a pressure sensitive adhesive (e.g., OCA) and have a thickness of about 40 µm to about 150 µm. According to an embodiment, the first layer 442 and the second layer 441 may be integrally attached (e.g., laminated) through the pressure sensitive adhesive P.

According to various embodiments, without the illustrated pressure sensitive adhesive P, the first layer 442 may be made of the first material, and the second layer 441 may be disposed under the first layer 442 and made of a second material. According to an embodiment, the first material and the second material may be the same or different from each other. For example, the first layer 442 may include any one of a polyethylene terephthalate (PET) film, a polyimide (PI) film, a thermoplastic polyurethane (TPU) film, a tri-acetyl-cellulose film (TAC)-based film, or a cyclo-olefin polymer (COP)-based film. According to an embodiment, the bending characteristic of the flexible display (e.g., the flexible display 400 of FIG. 5) may be adjusted by adjusting a thickness of the first layer 442 of the buffer layer 440. According to an embodiment, the first layer 442 may be formed to have a density of minimum 0.6 g/mm³. According to an embodiment, the second layer 441 may be formed to have a density of maximum 0.6 g/mm³. In some embodiments, the pressure sensitive adhesive P may be treated (e.g., blackened) with an opaque layer so that an internal step structure is not visible through the display panel (e.g., the display panel 430 of FIG. 5). For example, a blackening coating may be applied to the pressure sensitive adhesive (P) or a blackening layer may be added to the pressure sensitive adhesive (P).

In some embodiments, the first layer 442 may include an anti-reflection film (e.g., a TAC-based film or a COP-based film) stacked on the second layer 441 of a cushion film material. According to an embodiment, the cushion film may have a thickness of about 50 µm, and the thickness thereof may be adjusted to about maximum 150 µm. According to an embodiment, the anti-reflection film may include a linearly polarized film and/or a circularly polarized film and control light scattered from a downward direction of the display panel (e.g., the display panel 430 of FIG. 5) and light reflected from the metal sheet layer (e.g., the metal sheet layer 450 of FIG. 5) due to the scattered light. According to an embodiment, the anti-reflection film may improve a pattern see-through problem due to the difference in the refractive index of the step portion according to the thickness of a coil member (e.g., the coil member 462 of FIG. 7A) of the digitizer (e.g., the digitizer 460 of FIG. 5) while maintaining the bending characteristics of the flexible display (e.g., the flexible display 400 of FIG. 5). According to an embodiment, a pressure sensitive adhesive (e.g., OCA or PSA) may be disposed on an upper surface and/or a lower surface of the anti-reflection film. According to an embodiment, the anti-reflection film is a low-transmittance film and may have a transmittance of 60% or less, and be made of a low-transmittance film or a low-reflection film. According to an embodiment, the low-reflection film may be formed in a form (PVA/TAC/PVA) in which polyvinyl alcohol (PVA) is stacked on both surfaces with a TAC interposed therebetween or may be formed with any one of PVA and TAC. Further, the low-reflection film may include a separate material capable of delaying the phase difference. In some embodiments, the low-reflection film may have a laminate structure of COP and PVA (COP/PVA).

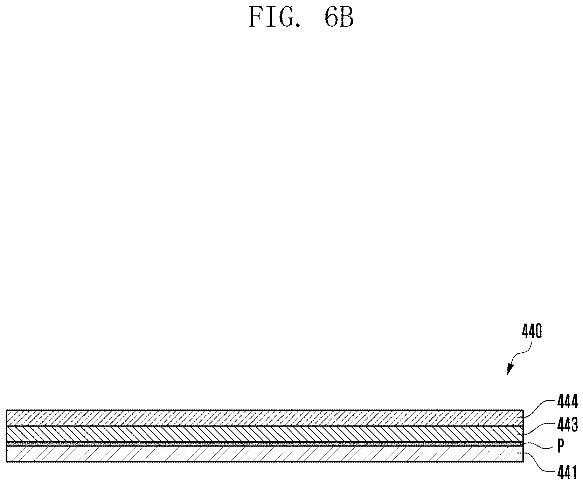

With reference to FIG. 6B, the buffer layer 440 may include a polyvinyl alcohol (PVA) layer 443 and a film layer 444 (e.g., TAC-based film layer or COP-based film layer) stacked on the PVA layer 443 as a first layer (e.g., the first layer 442 of FIG. 6A). According to an embodiment, the PVA layer 443 may have a polarization wavelength function and an opaque color (e.g., black), and the TAC-based film layer 444 may be disposed as a protective film layer to protect the PVA layer 443. According to an embodiment, the first layer (e.g., the first layer 442 of FIG. 6A) may include a TAC-based film layer 444 and a PVA layer 443 stacked thereon. According to an embodiment, the first layer may be formed in a thickness of about 31 µm or less.

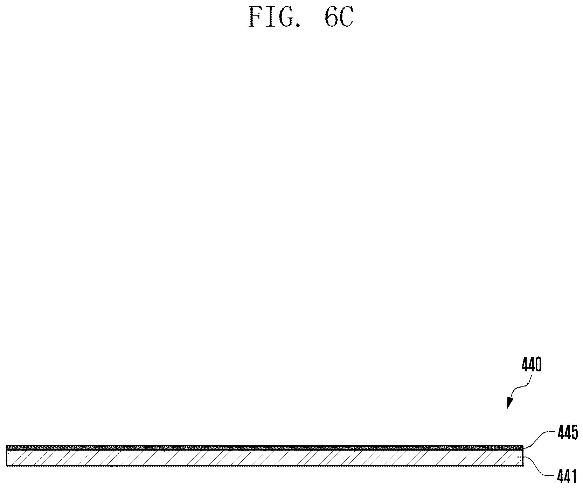

With reference to FIG. 6C, the buffer layer 440 may include a black coating layer 445 coated on the second layer 441 of a cushion film material as a first layer (e.g., the first layer 442 of FIG. 6A). According to an embodiment, the black coating layer 445 may be blackened or processed opaquely through an opaque dye (or salt solution).

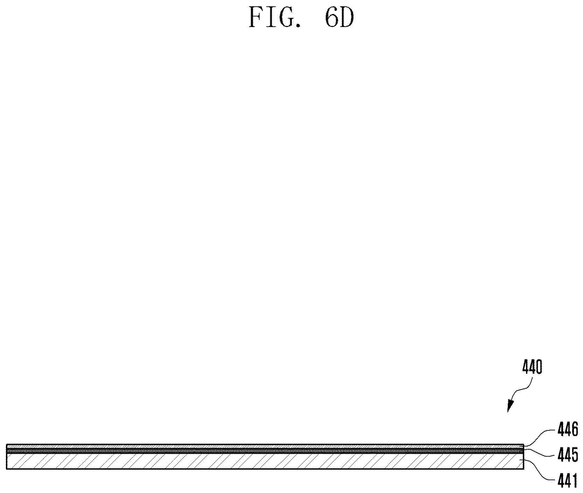

With reference to FIG. 6D, the buffer layer 440 may include a hard coating layer 446 disposed on the black coating layer 445 as a first layer (e.g., the first layer 442 of FIG. 6A). In this case, the hard coating layer 446 may protect the black coating layer 445 and help to adjust the bending characteristics of the flexible display (e.g., the flexible display 400 of FIG. 5).

According to various embodiments, in the case of the aforementioned FIGS. 6A to 6D, an upper surface and/or a lower surface of at least one layer (e.g., the first layer and/or the second layer) may be blackened (e.g., black coated) or may be processed opaquely with a black dye.

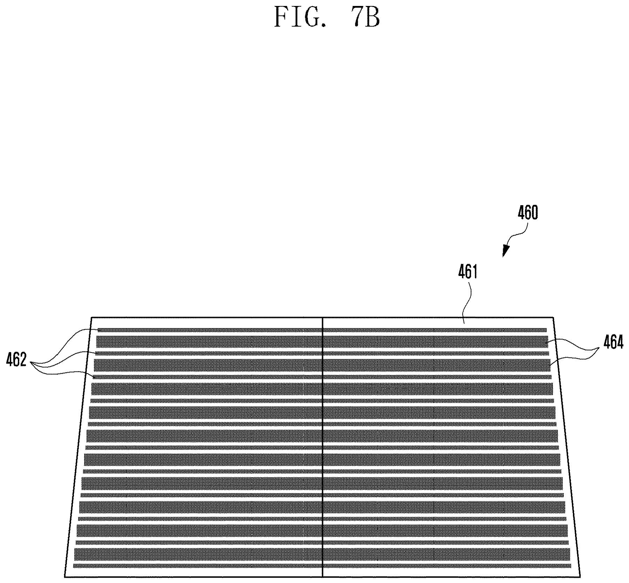

FIGS. 7A and 7B are diagrams illustrating a constitution of a digitizer 460 according to various embodiments of the disclosure.

With reference to FIG. 7A, the digitizer 460 may include a dielectric substrate 461 and a coil member 462 (e.g., Cu pattern) disposed at the dielectric substrate 461. According to an embodiment, the coil member 462 may have a shape bent multiple times in the dielectric substrate 461. According to an embodiment, the coil member 462 may have a step structure protruded to a predetermined height from a substrate surface of the dielectric substrate 461.

In a flexible display (e.g., the flexible display 400 of FIG. 5), because of a difference in refractive index of a step area according to a thickness of the coil member 462 of the digitizer 460, a pattern see-through problem may occur. Accordingly, according to an example embodiment of the disclosure, the flexible display may include step compensation members 463 and 464 disposed in a space 4602 between coil parts bent multiple times of the coil member 462. According to an embodiment, the step compensation members 463 and 464 may compensate for a height of the coil member 462 to reduce light reflection noise, thereby preventing a pattern see-through phenomenon of the step portion.

For example, the step compensating member 463 may include a dummy pattern 463 disposed in the space 4602 between coil parts bent multiple times of the coil member 462. According to an embodiment, the dummy pattern 463 may be formed together or separately when the coil member 462 is formed. According to an embodiment, the dummy pattern 463 may be formed to have an irregular pattern shape, thereby reducing light reflection noise. According to an embodiment, the dummy pattern 463 may be formed in an irregular pattern by cutting the coil member 462. According to an embodiment, the dummy pattern 463 may be substantially the same or may be disposed to have different lengths and/or areas.

As illustrated in FIG. 7B, the step compensating member 464 may include a step compensating dummy 464 disposed in a space between coil parts bent multiple times of the coil member 462. In this case, because the step compensation dummy 464 has a larger area than that of the above-described dummy pattern 463, the step portion of the coil member 462 may be minimized.

In some embodiments, the dummy pattern 463 and/or the step compensation dummy 464 used as the step compensation members 463 and 464 may be made of a metal or a polymer (e.g., resin). In some embodiments, the dummy pattern 463 and/or the step compensation dummy 464 may be formed through anodizing. In some embodiments, the dummy pattern 463 and/or the step compensation dummy 464 may be made opaque through a blackening process or a black dye. According to an embodiment, the surface of the coil member 462 of the digitizer 460 may be opaque through black processing or blackening dye. In some embodiments, the digitizer 460 may include both the dummy pattern 463 and the step compensation dummy 464 described above.

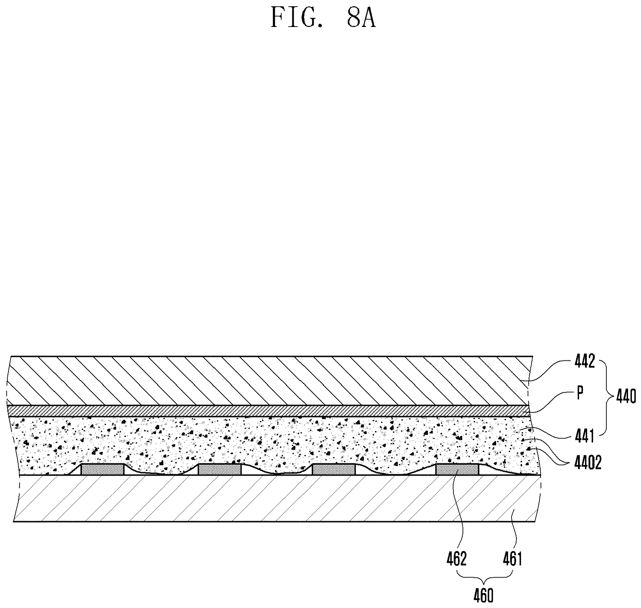

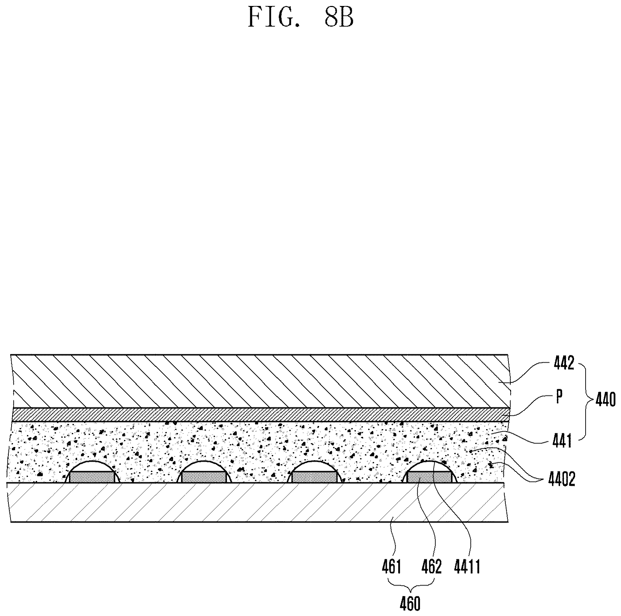

FIGS. 8A and 8B are diagrams illustrating a stacked structure of a buffer layer 440 and a digitizer 460 according to various embodiments of the disclosure.

With reference to FIG. 8A, the buffer layer 440 may include a first layer 442 (e.g., high density layer) disposed under a display panel (e.g., the display panel 430 of FIG. 5) and a second layer 441 (e.g., low density layer) disposed through an adhesive layer P under the first layer 442. According to an embodiment, the first layer 441 is made of a polymer material and may include a plurality of air gaps 4402 formed therein. According to an embodiment, the second layer 441 may provide elasticity that may easily receive a step compensation member (e.g., the step compensation members 463 and 464 of FIGS. 7A and 7B) and/or a protruded coil member 462 of the digitizer 460 through a plurality of pore structures, thereby performing a buffering action.

With reference to FIG. 8B, the buffer layer 440 may include a plurality of seating grooves 4411 formed at a surface facing the digitizer 460. According to an embodiment, the plurality of seating grooves 4411 may be formed in an area corresponding to the protruded coil member 462 of the digitizer 460. Accordingly, in the case that the digitizer 460 is stacked on the buffer layer 440, the coil member 462 may be received in the plurality of seating grooves 4411. In this case, the first layer 442 may receive help in removing air bubbles between the first layer 442 and the surface of the digitizer 460 through the plurality of seating grooves 4411. In some embodiments, the plurality of seating grooves 4411 may be formed (not illustrated) in the first layer 442 having no pore structure.

According to various embodiments, the electronic device (e.g., the electronic device 100 of FIG. 1A) may include a first housing (e.g., the first housing 110 of FIG. 1A); a second housing (e.g., the second housing 120 of FIG. 1A), a hinge module (e.g., the hinge module 140 of FIG. 3) configured to foldably connect the first housing and the second housing; and a flexible display (e.g., the flexible display 400 of FIG. 1A) disposed to receive support of the first housing, the hinge module, and the second housing, wherein the flexible display may include a window layer (e.g., the window layer 410 of FIG. 5); a display panel (e.g., the display panel 430 of FIG. 5) disposed under the window layer; a first layer (e.g., the first layer 442 of FIG. 6) having a first density and disposed under the display panel; and a second layer (e.g., the second layer 441 of FIG. 6) disposed under the first layer and having a second density lower than the first density; and a step structure (e.g., the digitizer 460 of FIG. 4) disposed under the second layer.

According to various embodiments, the first layer and the second layer may include polymers made of the same material and having different densities.

According to various embodiments, the first layer and the second layer may be attached to each other through an opaque-treated pressure sensitive adhesive.

According to various embodiments, the first layer may be formed to have a density of minimum 0.6 g/mm³, and the second layer 441 may be formed to have a density of maximum 0.6 g/mm³.

According to various embodiments, the first layer may include a black coating layer stacked on the second layer.

According to various embodiments, the black coating layer may be formed through blackening treatment or dye treatment.

According to various embodiments, the first layer may further include a hard coating layer stacked on the black coating layer.

According to various embodiments, the first layer may include any one of a tri-acetyl-cellulose film (TAC)-based film or a cyclo-olefin polymer (COP)-based film stacked on the second layer.

According to various embodiments, the electronic device may further include a polyvinyl alcohol (PVA) layer disposed between the second layer and the TAC-based film or between the second layer and the COP-based film.

According to various embodiments, the first layer may include at least one of a polyethylene terephthalate (PET) film, a polyimide (PI) film, or a thermoplastic polyurethane (TPU) film stacked on the second layer.

According to various embodiments, the second layer may include a plurality of air gaps.

According to various embodiments, the step structure may include a digitizer including a dielectric substrate and a coil member disposed in a manner of being bent multiple times in the dielectric substrate.

According to various embodiments, the electronic device may further include a step compensating member disposed to compensate for a height of the coil member in a space between coil parts bent multiple times of the coil member.

According to various embodiments, the step compensation member may be formed opaquely through blackening treatment or oxidation treatment.

According to various embodiments, the step compensation member may include a metal dummy and/or a polymer dummy disposed to be insulated from the coil member in the dielectric substrate.

According to various embodiments, the flexible display (e.g., the flexible display 400 of FIG. 1A) may include a window layer (e.g., the window layer 410 of FIG. 5); a display panel (e.g., the display panel 430 of FIG. 5) disposed under the window layer; a first layer (e.g., the first layer 442 of FIG. 6) having a first density and disposed under the display panel; and a second layer (e.g., the second layer 441 of FIG. 6) disposed under the first layer and having a second density lower than the first density.

According to various embodiments, the first layer may be formed to have a density of minimum 0.6 g/mm³, and the second layer 441 may be formed to have a density of maximum 0.6 g/mm³.

According to various embodiments, a digitizer disposed under the second layer may include a dielectric substrate; a coil member disposed in a manner of being bent multiple times in the dielectric substrate; and a step compensation member disposed to compensate for a height of the coil member in a space between coil parts of the coil member bent multiple times.

According to various embodiments, the electronic device (e.g., the electronic device 100 of FIG. 1A) may include a hinge module (e.g., the hinge module 140 of FIG. 3) and a foldable housing connected to the hinge module, wherein the foldable housing may include a first housing (e.g., the first housing 110 of FIG. 1A) including a first surface (e.g., the first surface 111 of FIG. 1A) facing in a first direction (e.g., the z-axis direction of FIG. 1A) and a second surface (e.g., the second surface 112 of FIG. 1C) facing in a second direction (e.g., the z-axis direction of FIG. 1A) opposite to the first surface in an unfolded state; a second housing (e.g., the second housing 120 of FIG. 1A) including a third surface (e.g., the third surface 121 of FIG. 1A) facing in the first direction and a fourth surface (e.g., the fourth surface 122 of FIG. 1C) facing in the second direction in an unfolded state; a foldable housing configured to operate to face the first surface and the third surface in a folded state; and a flexible display (e.g., the flexible display 400 of FIG. 1A) disposed from the first surface to at least a portion of the third surface, wherein the flexible display may include a window layer (e.g., the window layer 410 of FIG. 5); a display panel (e.g., the display panel 430 of FIG. 5) disposed under the window layer; a first layer (e.g., the first layer 442 of FIG. 6) having a first density and disposed under the display panel; a second layer (e.g., the second layer 441 of FIG. 6) disposed under the first layer and having a second density lower than the first density; and a digitizer (e.g., the digitizer 460 of FIG. 7A) disposed under the second layer, wherein the digitizer may include a dielectric substrate (e.g., the dielectric substrate 461 of FIG. 7A); a coil member (e.g., the coil member 462 of FIG. 7A) disposed in a manner of being bent multiple times in the dielectric substrate; and a step compensation member (e.g., the dummy pattern 463 of FIG. 7A or the step compensation dummy 464 of FIG. 7B) disposed to compensate a height of the coil member in a space between coil parts of the coil member bent multiple times, wherein the second layer may include a plurality of seating grooves (e.g., the seating grooves 4411 of FIG. 8B) formed on a surface in contact with the digitizer and configured to receive the coil member and/or the step compensation member.

According to various embodiments, the step compensation member may include a metal dummy and/or a polymer dummy disposed to be insulated from the coil member in the dielectric substrate.

Embodiments of the disclosure disclosed in this specification and drawings merely present specific examples in order to easily describe the technical contents according to the embodiments of the disclosure and to help the understanding of the embodiments of the disclosure, and they are not intend to limit the scope of the embodiments of the disclosure.

## Claims

1. An electronic device (100), comprising:
a first housing (110);
a second housing (120);
a hinge module (140) configured to foldably connect the first housing and the second housing;
a flexible display (400) disposed to receive support from the first housing (110) and the second housing (120),
wherein the flexible display (400) comprises:
a window layer (410);
a display panel (430) disposed under the window layer (410);
a first layer (442) having a first density and disposed under the display panel (430); and
a second layer (441) disposed under the first layer (442) and having a second density lower than the first density;
the electronic device (100) **characterized by** comprising:
a step structure (460) disposed under the second layer (441), wherein the step structure comprises a digitizer (460) including a dielectric substrate (461) and a coil member (462) disposed in a manner of being bent multiple times in the dielectric substrate (461); and
a step compensating member (463) disposed to compensate for a height of the coil member (462) in a space (4602) between coil parts bent multiple times of the coil member (462).

2. The electronic device (100) of claim 1, wherein the first layer (442) and the second layer (441) comprise polymers made of the same material and having different densities.

3. The electronic device (100) of claim 1, wherein the first layer (442) and the second layer (441) are attached to each other through an opaque-treated pressure sensitive adhesive.

4. The electronic device (100) of claim 1, wherein the first layer (442) is formed to have a density of minimum 0.6 g/mm³, and the second layer (441) is formed to have a density of maximum 0.6 g/mm³.

5. The electronic device (100) of claim 1, wherein the first layer (442) comprises a black coating layer (445) stacked on the second layer (441) .

6. The electronic device (100) of claim 5, wherein the black coating layer (445) is formed through blackening treatment or dye treatment.

7. The electronic device (100) of claim 5, wherein the first layer (442) further comprises a hard coating layer (446) stacked on the black coating layer (445).

8. The electronic device (100) of claim 1, wherein the first layer (442) comprises any one of a tri-acetyl-cellulose film, TAC-based film (444) or a cyclo-olefin polymer, COP-based film stacked on the second layer (441).

9. The electronic device (100) of claim 8, further comprising a polyvinyl alcohol (PVA) layer (443) disposed between the second layer (441) and the TAC-based film (444) or between the second layer (441) and the COP-based film.

10. The electronic device (100) of claim 1, wherein the first layer (442) comprises at least one of a polyethylene terephthalate, PET, film, a polyimide, PI, film, or a thermoplastic polyurethane, TPU, film stacked on the second layer (441).

11. The electronic device (100) of claim 1, wherein the second layer (441) comprises a plurality of air gaps (4402).

12. The electronic device of claim 1, wherein the step compensation member (463) is formed opaquely through blackening treatment or oxidation treatment.

13. The electronic device of claim 1, wherein the step compensating member (463) comprises a metal dummy and/or a polymer dummy disposed to be insulated from the coil member (462) in the dielectric substrate (461).

## Patentansprüche

1. Elektronische Vorrichtung (100), umfassend:
ein erstes Gehäuse (110);
ein zweites Gehäuse (120);
ein Scharniermodul (140), das dazu konfiguriert ist, das erste Gehäuse und das zweite Gehäuse klappbar zu verbinden;
eine flexible Anzeige (400), die dazu angeordnet ist, Unterstützung von dem ersten Gehäuse (110) und dem zweiten Gehäuse (120) zu empfangen,
wobei die flexible Anzeige (400) Folgendes umfasst:
eine Fensterschicht (410);
ein Anzeigefeld (430), das unter der Fensterschicht (410) angeordnet ist;
eine erste Schicht (442), die eine erste Dichte aufweist und die unter dem Anzeigefeld (430) angeordnet ist; und
eine zweite Schicht (441), die unter der ersten Schicht (442) angeordnet ist und eine zweite Dichte aufweist, die geringer als die erste Dichte ist;
wobei die elektronische Vorrichtung (100) **dadurch gekennzeichnet ist, dass** sie Folgendes umfasst:
eine Stufenstruktur (460), die unter der zweiten Schicht (441) angeordnet ist, wobei die Stufenstruktur einen Digitalisierer (460) umfasst, der ein dielektrisches Substrat (461) und ein Spulenelement (462) beinhaltet, das so angeordnet ist, dass es mehrfach in dem dielektrischen Substrat (461) gebogen wird; und
ein Stufenausgleichselement (463), das dazu angeordnet ist, eine Höhe des Spulenelements (462) in einem Raum (4602) zwischen mehrfach gebogenen Spulenteilen des Spulenelements (462) auszugleichen.

2. Elektronische Vorrichtung (100) nach Anspruch 1, wobei die erste Schicht (442) und die zweite Schicht (441) Polymere umfassen, die aus demselben Material hergestellt sind und unterschiedliche Dichten aufweisen.

3. Elektronische Vorrichtung (100) nach Anspruch 1, wobei die erste Schicht (442) und die zweite Schicht (441) durch einen zur Undurchsichtigkeit behandelten druckempfindlichen Klebstoff aneinander befestigt sind.

4. Elektronische Vorrichtung (100) nach Anspruch 1, wobei die erste Schicht (442) so ausgebildet ist, dass sie eine Dichte von mindestens 0,6 g/mm³ aufweist, und die zweite Schicht (441) so ausgebildet ist, dass sie eine Dichte von höchstens 0,6 g/mm³ aufweist.

5. Elektronische Vorrichtung (100) nach Anspruch 1, wobei die erste Schicht (442) eine schwarze Beschichtungsschicht (445) umfasst, die auf der zweiten Schicht (441) gestapelt ist.

6. Elektronische Vorrichtung (100) nach Anspruch 5, wobei die schwarze Beschichtungsschicht (445) durch Schwärzungsbehandlung oder Farbstoffbehandlung gebildet ist.

7. Elektronische Vorrichtung (100) nach Anspruch 5, wobei die erste Schicht (442) ferner eine harte Beschichtungsschicht (446) umfasst, die auf der schwarzen Beschichtungsschicht (445) gestapelt ist.

8. Elektronische Vorrichtung (100) nach Anspruch 1, wobei die erste Schicht (442) eine beliebige von einer Tri-Acetyl-Cellulose-Folie, TAC-basierten Folie (444) oder einer Cycloolefinpolymer-, COP-basierten Folie umfasst, die auf der zweiten Schicht (441) gestapelt ist.

9. Elektronische Vorrichtung (100) nach Anspruch 8, ferner umfassend eine Polyvinylalkohol- (PVA-) Schicht (443), die zwischen der zweiten Schicht (441) und der TAC-basierten Folie (444) oder zwischen der zweiten Schicht (441) und der COP-basierten Folie angeordnet ist.

10. Elektronische Vorrichtung (100) nach Anspruch 1, wobei die erste Schicht (442) mindestens eine von einer Polyethylenterephthalat- , PET-, Folie, einer Polyimid-, PI-, Folie oder einer thermoplastischen Polyurethan-, TPU-, Folie umfasst, die auf der zweiten Schicht (441) gestapelt ist.

11. Elektronische Vorrichtung (100) nach Anspruch 1, wobei die zweite Schicht (441) eine Vielzahl von Luftspalten (4402) umfasst.

12. Elektronische Vorrichtung nach Anspruch 1, wobei das Stufenausgleichselement (463) durch Schwärzungsbehandlung oder Oxidationsbehandlung undurchsichtig ausgebildet ist.

13. Elektronische Vorrichtung nach Anspruch 1, wobei das Stufenausgleichselement (463) einen Metalldummy und/oder einen Polymerdummy umfasst, der so angeordnet ist, dass er von dem Spulenelement (462) in dem dielektrischen Substrat (461) isoliert ist.

## Revendications

1. Dispositif électronique (100), comprenant :
un premier boîtier (110) ;
un second boîtier (120) ;
un module de charnière (140) conçu pour relier de manière pliable le premier boîtier et le second boîtier ;
un écran souple (400) disposé pour recevoir un support du premier boîtier (110) et du second boîtier (120),
ledit écran souple (400) comprenant :
une couche de fenêtre (410) ;
un panneau d'affichage (430) disposé sous la couche de fenêtre (410) ;
une première couche (442) possédant une première densité et disposée sous le panneau d'affichage (430) ; et
une seconde couche (441) disposée sous la première couche (442) et possédant une seconde densité inférieure à la première densité ;
le dispositif électronique (100) caractérisé en comprenant :
une structure étagée (460) disposée sous la seconde couche (441), ladite structure étagée comprenant un numériseur (460) comprenant un substrat diélectrique (461) et un élément de bobine (462) disposé de manière à être plié plusieurs fois dans le substrat diélectrique (461) ; et
un élément de compensation d'étage (463) disposé pour compenser une hauteur de l'élément de bobine (462) dans un espace (4602) entre des parties de bobine pliées plusieurs fois de l'élément de bobine (462).

2. Dispositif électronique (100) de la revendication 1, ladite première couche (442) et ladite seconde couche (441) comprenant des polymères constitués du même matériau et possédant des densités différentes.

3. Dispositif électronique (100) de la revendication 1, ladite première couche (442) et ladite seconde couche (441) étant fixées l'une à l'autre par un adhésif sensible à la pression traité opaque.

4. Dispositif électronique (100) de la revendication 1, ladite première couche (442) étant formée pour posséder une densité supérieure ou égale à 0,6 g/mm³, et ladite seconde couche (441) étant formée pour posséder une densité inférieure ou égale à 0,6 g/mm³.

5. Dispositif électronique (100) de la revendication 1, ladite première couche (442) comprenant une couche de revêtement noire (445) empilée sur ladite seconde couche (441).

6. Dispositif électronique (100) de la revendication 5, ladite couche de revêtement noire (445) étant formée par un traitement de noircissement ou un traitement de teinture.

7. Dispositif électronique (100) de la revendication 5, ladite première couche (442) comprenant en outre une couche de revêtement dure (446) empilée sur ladite couche de revêtement noire (445).

8. Dispositif électronique (100) de la revendication 1, ladite première couche (442) comprenant l'un quelconque d'un film à base de triacétate de cellulose, TAC (444) ou d'un film à base de polymère de cyclo-oléfine, COP, empilé sur ladite seconde couche (441).

9. Dispositif électronique (100) de la revendication 8, comprenant en outre une couche d'alcool polyvinylique (PVA) (443) disposée entre la seconde couche (441) et le film à base de TAC (444) ou entre la seconde couche (441) et le film à base de COP.

10. Dispositif électronique (100) de la revendication 1, ladite première couche (442) comprenant au moins l'un d'un film de polyéthylène téréphtalate, PET, d'un film de polyimide, PI, ou d'un film de polyuréthane thermoplastique, TPU, empilé sur ladite seconde couche (441).

11. Dispositif électronique (100) de la revendication 1, ladite seconde couche (441) comprenant une pluralité d'espaces vides (4402).

12. Dispositif électronique de la revendication 1, ledit élément de compensation d'étage (463) étant formé de manière opaque par un traitement de noircissement ou un traitement d'oxydation.

13. Dispositif électronique de la revendication 1, ledit élément de compensation d'étage (463) comprenant une pièce factice métallique et/ou une pièce factice polymère disposées pour être isolées de l'élément de bobine (462) dans le substrat diélectrique (461).
